# EUROPEAN PATENT SPECIFICATION

(11) **EP 2 499 544 B1**
(45) Date of publication and mention of the grant of the patent: **06.01.2016**
(21) Application number: 09776190.2
(22) Date of filing: 01.09.2009
(51) Int. Cl.: G05B 19/4093

(54) **APPARATUS FOR ESTIMATING CUT DESCRIPTIVE PARAMETERS IN RELATION TO DIGITAL CUTTING**
VORRICHTUNG ZUR SCHÄTZUNG VON BESCHREIBENDEN SCHNEIDPARAMETERN IN BEZUG AUF DIGITALES SCHNEIDEN
APPAREIL D ESTIMATION DE PARAMÈTRES DESCRIPTIFS DE COUPE CONCERNANT LA COUPE NUMÉRIQUE

(43) Date of publication of application: 19.09.2012
(73) Proprietor: CUT-Estimator, 8520 Lystrup (DK)
(72) Inventor: MIKKELSEN, Jørgen, Bugge, DK-8250 Egå (DK)
(74) Representative: Patentgruppen
(86) International application number: PCT/DK2009/000194
(87) International publication number: WO 2011/026490

(56) References cited:
- EP-A1- 1 357 484
- US-A1- 2002 065 790
- US-B1- 7 065 420

## Description

### BACKGROUND OF THE INVENTION

In today's modem digital cutting industry a huge range of intelligent and sophisticated cutting solutions are used for cutting 2D contours in various materials. In relation to some of these digital cutting solution estimations on expected expenses in relation to cutting a specific design of an object may be provided to the user or customer.

Such estimations can be provided when the final design of the object is known and it is thereby, at this point in the design process of an object, possible to get an estimation of time for cutting the object and thereby costs in relation to cutting the object, cf. EP/357484 A1.

A main rule in relation to known estimation methods is that the earlier in the design process of an object an estimation is made, the more inaccurate the result of the estimation is going to be. Obviously this is disadvantageous, especially in the early design phase (e.g. during a brainstorm) where the economical effect of choosing between different design parameters such as e.g. size, material, complexity, etc. of the object is not known. The known estimation methods are thus a hindrance in making decisions of one design rather than another early in the design process, especially because the economical effects of choosing one design rather than another are not known.

### SUMMARY

It may be an object of the present invention to provide a method and apparatus which overcomes the above-mentioned disadvantages.

This object is obtained by an apparatus for estimating cut descriptive parameters in relation to digital cutting, by means of one or more digital cutting machineries, of one or more objects in a sheet material,
said estimating apparatus comprising:
an input module enabling a user to provide a set of object parameters to said estimating apparatus, said object parameters comprising geometric characteristics of said one or more objects to be cut by the one or more digital cutting machineries,
a data storage for storage of information at least in relation to said one or more digital cutting machineries and information at least in relation to said sheet material,
an estimating module for estimating said cut descriptive parameters by means of a data processor unit based on said object parameters provided by a user and the stored information relating to the one or more digital cutting machineries and the stored information relating to the sheet material, and
an output module for presenting said cut descriptive parameters to said user,
said cut descriptive parameters being estimated based on a correlation of said object parameters, said information in relation to said one or more digital cutting machineries and said information in relation to said sheet material.

The cut descriptive parameters are understood as substantial parameters describing specific information such as e.g. time and price for cutting an amount of used sheet material related to the actual cutting of one or more objects in its final design. By estimating cut descriptive parameters early in the design phase a foundation is achieved for taking decision on which design to continue with or an estimation on the costs, amount of time and sheet material needed for one or more objects to be cut in a sheet material.

The object is understood as a figure or contour which is to be cut out in a sheet material. Such object may e.g. be used in commercials, displays, exhibition stands, etc. and may display everything possible such as drawings of cartoon figures, aircrafts, fruit and so on.

The geometric characteristics of an object may be described by means of "object parameters". The object parameters describe the object in terms of what is important to estimate cut descriptive parameters without knowledge of the final design of the object. Hereby the possibility is achieved to get estimations of cut descriptive parameters such as time and price for cutting the object e.g. in various designs early in the design process before the decision of the final design of the object is made.

Furthermore, information of cutting machinery and sheet material used in relation to cutting a specific object such as cutting tool, type of sheet material, etc. may also be referred to as object parameters. When a specific cutting tool or characteristic in relation to sheet material is desired, that cutting tool or sheet material characteristic may be included in the parameters referred to as object parameters.

The user is understood as the person (operator of a cutting machinery, designer, etc.) who is initiating the estimations e.g. in form of manually providing object parameters to the estimating apparatus. Furthermore, it should be mentioned that another machine or computer may initiate the estimation automatically, in such situations this machine or computer may be interpreted as a user. Hence, a user in form of a person may initiate the estimations and the estimating apparatus may provide the estimations to the same user and/or a user in form of a machine and vice versa. Furthermore, it should be noted that the operator of a cutting machine may also sometimes operate the estimation apparatus.

The sheet material is understood as the material in which the object is cut. The sheet material is preferably used in form of single pieces of sheets or rolls of material, the latter of a considerable length e.g. measured up to thousands of meters.

In an embodiment of the invention, at least one of said object parameters is selected from the list consisting of:
- size of the box bounding an object to be cut,
- number of corner points of an object to be cut,
- length of cutting path of an object to be cut,
- presence of pre-print of object contour on the sheet material,
- tool to be used for cutting an object, and
- number of objects to be cut.

Information of the bounding box size of the object to be cut may be used by the estimating apparatus to estimate the needed area of sheet material needed for cutting one or more objects. Alternatively, the bounding box size may be the area of the sheet material needed to comprise an object.

Information provided by the user may preferably include object parameters, such as the number of corner points which may partly describe the geometric characteristics or shape of the object to be cut. By providing geometric characteristics of an object to the estimating apparatus, the estimating apparatus is capable of estimating the contour line of the object and thereby estimating the total length to be cut, when cutting an object.

Information of corner points of the object furthermore applies information to the estimating apparatus regarding the shape intricacy of the object to be cut The estimating apparatus may then estimate time where the cutting machinery is not cutting due to acute angles, center removal, number of corner points, etc. of the object. Hereby contribution to the total time it takes to cut an object is achieved.

Furthermore, information provided by the user may preferably include the length of the contour of the object between the corner points, if a line between two corner points is curved or straight, etc. Such information may by used to increase the speed of estimations made by the estimating apparatus.

Information related to whether an object is printed, e.g. how the print is placed in relation to registration marks on the sheet material, may be provided to the estimating apparatus by a user. When cutting a printed object it is preferred that the cutting machinery knows the location of the print on the sheet material. This knowledge may be achieved by locating registration marks on the sheet material; the time for locating these registration marks is preferably included in the estimation of the cut descriptive parameters.

Information provided by a user to the estimating apparatus may be a desired cutting tool. The choice of cutting tool may be determined by a desired geometric characteristic of the cutting edge left by the cutting tool on the object. If a sharp cutting edge is preferred it may be advantageous to use a knife as cutting where a slightly rounded cutting edge may be obtained by using a router bit. Alternatively the cutting tool may be decided by sheet material characteristics such as hardness or thickness of the sheet material.

Information of the number of objects to be cut may be used by the estimating apparatus to determine the amount of needed sheet material and following the price and time for cutting this amount of objects. Furthermore, the estimating apparatus may suggest alternative numbers of objects to be cut, to optimize the coefficient of utilization of the sheet material where the alternative number of objects is close to the number of objects first provided to the estimating apparatus.

In an embodiment of the invention, at least one of said object parameters is the contour of an object to be cut selected from a predefined list of standard contours information relating to the standard contours of said predefined list being stored in said data storage.

Enabling the user to choose among a plurality of standard contours may increase the speed and precision of the estimations performed by the estimating apparatus and furthermore, it may ease the use of the estimating apparatus for the user. If the user needs to cut the contour of two persons shaking hands and it is possible to choose from the data storage a standard contour of the two persons shaking hands, the user may simply, in relation to the object, provide information of the bounding box and choose this desired standard.

Information of the contour shape of the object to be cut may be used by the estimating apparatus to retrieve the length of the circumference or cutting line of a specific contour or a standard contour similar to the contour of the object to be cut. Hereby information of time it takes to cut the object is achieved and if it is possible to select a standard contours matching the contour of the object to be cut, time is saved for the user of the estimating apparatus when initiating estimation.

In an embodiment of the invention, the set of object parameters comprises a selection of a sheet material from a list of sheet material for which information is stored in said data storage.

Information of sheet material may be used by the estimating apparatus to determine e.g. the cutting tool needed to cut in the sheet material and thereby knowledge of e.g. cutting speed is obtained. Furthermore, choice of information of cutting tool, maximum cutting speed, handling of the sheet material, etc. may also be indirectly determined based on selection of e.g. type of sheet material.

The estimating apparatus may comprise a data storage e.g. in form of a database where information in relation to various different types of sheet material is stored. This information may include thickness, rigidness, size, etc. in relation to each individual type of sheet material. The user may provide a huge range of information of the sheet material to the estimating apparatus simply by choosing a type of sheet material from the database. This may increase the speed and precision of the estimations as well as the need for the user to find and provide this information to the estimating apparatus.

It should be noted that if allowed by the administrator, a user e.g. a manufacture of sheet material, may also provide sheet material information to the data storage of the estimating apparatus.

In an embodiment of the invention, said stored information relating to said one or more digital cutting machineries and to said sheet material comprises cutting speeds for various combinations of one or more sheet material and one or more cutting tools.

Information related to the desired cutting machinery is preferably correlated with object parameters describing characteristics of the sheet material in which the object is to be cut. The information provided by the user or selected from the information stored in the data storage in relation to the sheet material and/or cutting machinery may e.g. be used by the estimating apparatus to find the maximum cutting speed which is an important contribution to time and price of estimations of cutting an object is archived.

In an embodiment of the invention, said stored information relating to said one or more digital cutting machineries and to said sheet material comprises information as to which of a list of cutting tools may be used for cutting which of said list of sheet material.

Information related to the desired cutting machinery is preferably correlated with object parameters describing characteristics of the sheet material in which the object is to be cut The information provided by the user or selected from the information stored in the data storage in relation to the sheet material and/or cutting machinery may e.g. be used by the estimating apparatus to provide cut descriptive parameters in relation to cutting an object with one or more matching cutting tools and sheet material. Hence, the user is not presented with cut descriptive parameters based on matched cutting tools and sheet material, which is not possible to match in reality. Furthermore, this is an important contribution to time and price of estimations of cutting an object.

Alternatively, the user may be presented to various different combinations of cutting tools and sheet material for cutting a given object which may give the user a better overview of the possibilities and e.g. even give him estimations of cut descriptive parameters in relation to cutting the object with one or more of the presented combinations.

In an embodiment of the invention, at least one of said cut descriptive parameters is selected from the list consisting of:
- costs of cutting the one or more objects,
- time in relation to cutting the one or more objects, and
- amount of sheet material to be used for cutting the one or more objects.

One example of a cut descriptive parameter is a cut descriptive parameter which describes the time it takes to cut one or more objects. The user hereby obtains information of production time of cutting one or more objects, which may indicate if the one or more objects can be cut before a predetermined deadline.

Furthermore, the possibility to structure and schedule different cutting operations and thereby optimize the time a cutting machinery is in use and cutting is hereby achieved. By structure is preferably understood optimizing production, the ability to plan cutting operations e.g. making use of the same cutting tool or sheet material to be able to cut more objects during the cutting operation, even objects from different costumers may be placed on the same sheet material.

A further example of a cut descriptive parameter is a cut descriptive parameter describing the price for cutting one or more objects. The user hereby achieves information of the costs in relation to cutting one or more objects and hereby basis for evaluating whether this cost is within the budget or simply if the design e.g. in relation to object size, type of sheet material, etc. of the object is worth this cost.

A further example of a cut descriptive parameter is a cut descriptive parameter describing the area of needed sheet material for cutting one or more objects. The user hereby achieves information of not exploited sheet material; the not exploited sheet material may e.g. be used to cut further objects with few further costs. Furthermore, such information may be used to determine if it may be possible to rearrange the objects on the sheet material to increase the amount of exploited sheet material.

The result achieved by this correlation is cut descriptive parameters such as time, price and amount of needed sheet material for cutting the object. These cut descriptive parameters may be estimated early in the design phase and used accordingly.

In an embodiment of the invention, the cut descriptive parameters related to previously made estimations are provided to the estimation apparatus.

The user or the cutting machinery may provide information of previously made estimation to the estimation apparatus, where they may be used for comparison and correction of future estimations.

Furthermore, information of previously made estimations e.g. in relation to change of standard contours such as change of contour shape, adding standard contours, object size, sheet material, etc. may be stored.

Moreover, the invention relates to a method of estimating cut descriptive parameters in relation to digital cutting of one or more objects in a sheet material, said method comprising the steps of:
- retrieving object parameters, comprising geometric characteristics of the object to be cut by means of an input module,
- retrieving information of a sheet material in which the object is to be cut, the information of the sheet material is retrieved from a data storage,
- correlating said object parameters and said information of said sheet material by means of a data processing unit, resulting in a cut descriptive parameter describing characteristics in relation to cutting the object, and
- presenting said cut descriptive parameters to said user by means of an output module.

The cut descriptive parameters are preferably estimated by means of an estimating apparatus and initiated by a user having information of the object to be cut. The user is providing this object parameter to the estimating apparatus together with information of the sheet material if the latter is not comprised in the estimating apparatus. When correlated with information of the object, the estimating apparatus provides cut descriptive parameters to the user informing the user e.g. of price and time for cutting the object.

In an embodiment of the invention, information in relation to a cutting machinery is included in said correlation performed by the data processing unit resulting in the cut descriptive parameters.

Information of the cutting machinery such as e.g. type and cutting tool used for cutting the object may preferably be part of the correlation of the information resulting in cut descriptive parameters.

In an embodiment of the invention, said correlation is performed in a location physically apart from a location of said cutting machinery.

In an embodiment of the invention said cut descriptive parameters is communicated from a first location to a second location by means of a data communication network.

The cut descriptive parameters may be provided centrally in relation to a plurality of global users; hence, the estimating apparatus may be located in a first country whereas the users may be located in second, third country, etc.

Moreover the invention relates to a computer program product directly loadable into the internal memory of a computer comprising software enabling the computer to possess the technical features of an estimating apparatus according to any of claims 1-8.

Moreover the invention related to a computer program product directly loadable into the internal memory of a computer comprising software enabling the computer to estimate cut descriptive parameters according to the method of any of claims 9-12.

The computer program product is stored on a computer-readable medium from where it is readable and executable by a computer located remotely from where the computer program product is stored. The computer program product is accessible via a data communication network such as the internet.

The execution environment may be an estimating apparatus located centrally on a server in relation to a plurality of users having access to the server from a computer located e.g. in a city or country different from city or country in which the server is located. The connection between the user's computer and the central server may be created via a public data communication network.

### FIGURE LIST

The invention will in the following be described with reference to the following figures in which:
- figure 1: illustrates an overview of elements of an embodiment of the invention,
- figure 2: illustrates a detailed overview of elements of an embodiment of the invention,
- figure 3: illustrates a flowchart of the use of an estimating apparatus according to an embodiment of the invention,
- figure 4a-4c: illustrate an example of different variations of an object according to an embodiment of the invention, and
- figure 5a and 5b: illustrate examples of layout of objects to be cut on a sheet material according to an embodiments of the invention.

### DETAILED DESCRIPTION

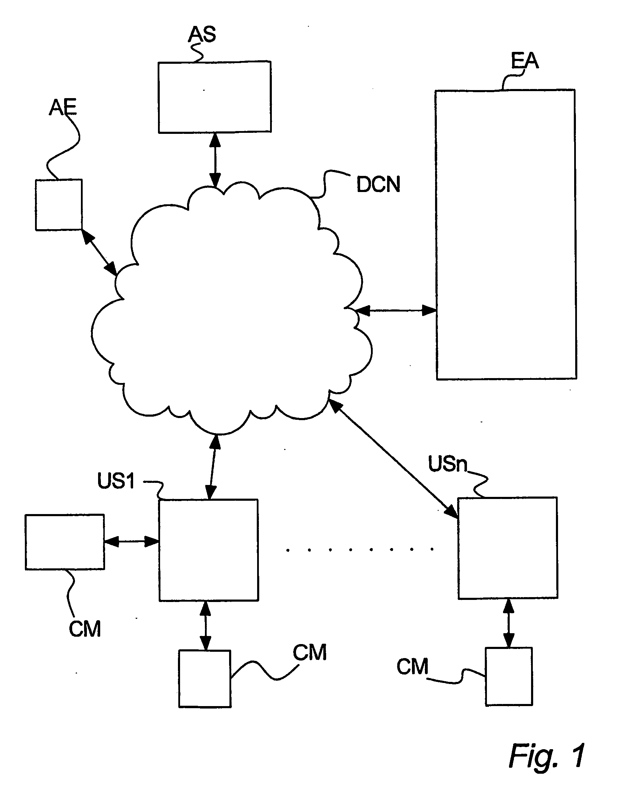

Figure 1 illustrates an overview of elements included in a preferred embodiment of the invention and how these elements communicate. The elements includes at least one or more user stations US, an estimating apparatus EA, an administration station AS a cutting machinery CM and a data communication network DCN.

The data communication network DCN may be a public network such as the internet, GSM (GSM; Global System for Mobile communication), UMTS (Universal Mobile Telecommunication System) network, etc. Hence, both wired and wireless data transmission may be used to communicate date between the elements of the embodiment illustrated in figure 1.

Through the user station US a user may communicate with the estimating apparatus EA and in this way the estimating apparatus EA is provided with information to be able to perform estimations and provide cut descriptive parameters CDP to the user. The cut descriptive parameters CDP may then be used to make decisions in relation to the final design of the object, e.g. how to cut the object. An administrator may e.g. via an administrator station AS control or perform adjustments of the estimation apparatus EA and in an embodiment even control or adjust parameters at the user station US.

Furthermore, the administrator may have access to add information to the central or local data storage DS e.g. to update existing information or to provide new information. The data storage DS located at the user station US is sometimes referred to as local database and the data storage DS located at the estimating apparatus EA is sometimes referred to as central data storage. The administrator may also allow ordinary users to have access to correct and add information of data located on the data storage of the estimating apparatus EA.

It should be noted that according to alternative embodiments the illustrated elements may communicate different than illustrated on figure 1. Hence, the cutting machinery CM may also be located in relation to and communicate directly with the administration station AS or estimating apparatus EA. Furthermore, the estimating apparatus EA may be located in relation to and communicate directly with a user station US or the administration station AS.

Furthermore, it should be noted that the estimating apparatus EA may communicate directly with additional elements AE without communicating through the user station US or administration station AS. The additional elements AE may e.g. be suppliers of sheet material, manufactures of cutting machinery CM, programs for designing objects, estimating apparatuses EA, etc.

The cutting machinery CM is preferably used in relation to digital two- or three-dimensional cutting of an object The estimating apparatus is therefore preferably used to estimate cut descriptive parameters in relation to digital cutting of an object in two dimensions (length and width) or in three dimensions (length, width and height) in a sheet material. This is for obtaining insight in the expenses and time spent on cutting a two- or three-dimensional object which may be used as basis for decision making in relation to design, sheet material, and numbers of objects to be cut, etc.

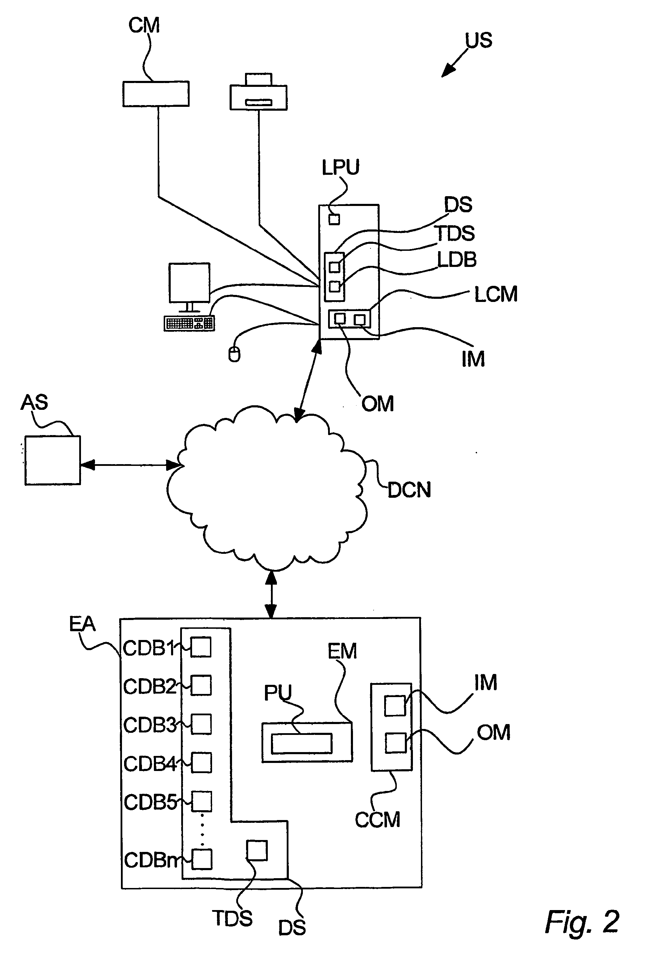

Figure 2 illustrates a user station US, an administration station AS and an estimating apparatus EA communicating through a data communication network DCN according to a preferred embodiment of the invention.

The illustrated user station US is preferably a stand-alone personal computer with common accessories and design tools/software. The user station US includes at least a data storage DS e.g. including a local database LDB, temporary data storage TDS, etc. Furthermore, the user station US may include a local processing unit LPU such as data processor, microprocessor, a Central Processing Unit, a local communication module LCM including an input module IM sometimes referred to as local input module and an output module OM sometimes referred to as local output module, etc.

The estimations may either be performed locally or remotely in relation to the user station US.

According to a preferred embodiment of the invention, the estimations are performed remotely in relation to the user station US. Hence, communication between the user station US and the estimating apparatus EA is needed. Still, according to the preferred embodiment of the invention, an applet having a graphical user interface is installed at the user station US and through this applet the user provides object parameters OP to the estimating apparatus EA. Furthermore, the result of the estimations, the cut descriptive parameters CDP, is provided to the user through the graphical user interface of the applet.

It should be noted that the user station may also have access to the estimation apparatus without use of any software installed only for this purpose.

Alternatively, the estimations may be performed locally in relation to the user station US e.g. in the situation where an estimating apparatus EA is located at the user station US or where an applet having estimating capabilities and the access to the required information is installed at the user station US.

The above described communication may be achieved by means of the local communication module LCM which connects the user station US with a data communication network DCN and thereby with other users, the estimating apparatus EA, etc.

The local input module IM may receive input e.g. from a mouse, a keyboard, equipment connected to the user station US such as e.g. a cutting machine CM, etc. Hereby it becomes possible for the user to manually provide information to the user station US and for equipment connected the user station US to automatically provide information to the user station US.

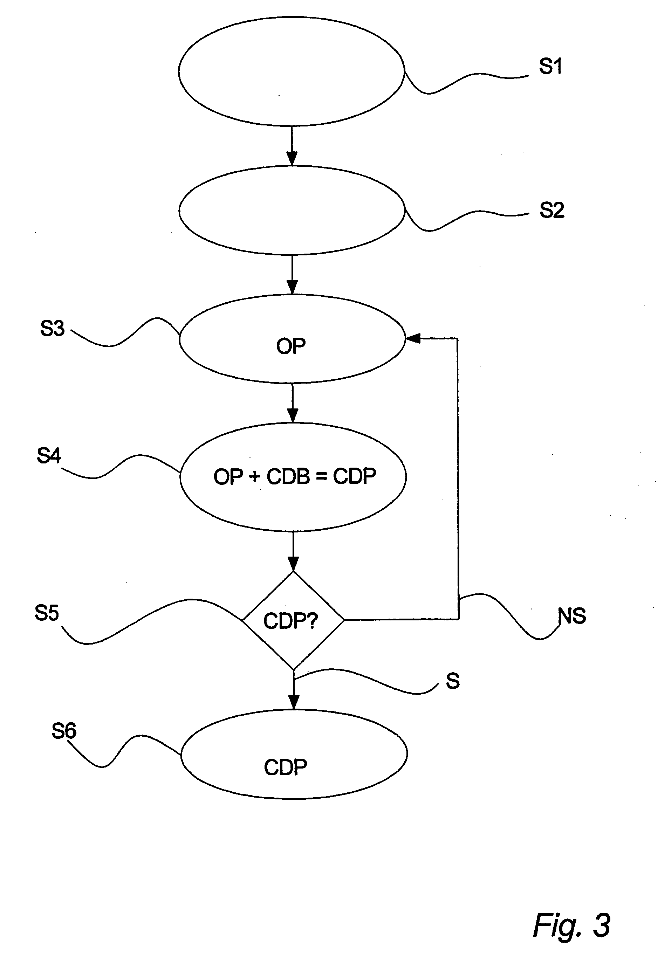

This information may e.g. by means of the local processor unit LPU either be stored in the local data storage DS, used for calculations locally or via the local communication module LCM transmitted to the estimating apparatus EA. As described in relation to figure 3 this information may be used to estimate the cut descriptive parameters CDP in relation to cutting an object.

The data storage DS of the user station US, e.g. one or more local databases LDB, may according to an embodiment of the invention comprise information related to the user's area of business, such information could e.g. be language, time zone, currency, etc.

Furthermore, the data storage DS of the user station US may comprise information related to the customer's equipment such as specific information of cutting machinery CM and its maintenance, pre- and post treatment in relation to cutting an object, buildings, scanning of registration marks, etc.

Finally, the data storage DS of the user station US may comprise information of earlier performed cutting jobs; such information could e.g. comprise time, price, deviations from estimation, cutting tools, etc.

The local output module OM may communicate the cut descriptive parameters CDP, status and/or results of the estimation, list of adjustments of the cutting machinery CM to a specific cutting task, etc. to the user. The local output module OM may e.g. communicate through a printer, a display in form of a computer screen, audio, video or other data signals, etc. It should be noted that the data signal may be converted in a plurality of ways preferably into readable characters on a computer screen or on a hard copy.

Hence, from the local output module OM the user may in various ways be informed of the cut descriptive parameters CDP.

According to an embodiment of the invention, the user station US has an interface to the cutting machinery CM which is controlled e.g. by firmware e.g. delivered by the cutting machinery manufacturer, different brands of vision system front-end software, etc.

It should be noted that at least some elements of the user station US could also be built into a cutting machinery CM e.g. in the control system of the cutting machinery CM.

The illustrated estimating apparatus EA may comprise a data storage DS which may include one or more central databases CDB, here illustrated as CDB1-CDBn, temporary data storage TDS, etc. Furthermore, the estimating apparatus EA may comprise an estimating module EM comprising a data processing unit PU such as a Central Processing Unit, microprocessor, etc., a central communication module CCM including input modules IM sometimes referred to as central input modules and output modules OM sometimes referred to as central output modules.

The ability of the estimating apparatus EA to communicate with the elements described above and in relation to figure 1 may be achieved by means of the central communication module CCM which connects the estimating apparatus EA with a data communication network DCN and thereby with users, administrators, servers, etc.

The central communication module CCM should preferably be understood as being the estimating apparatus EA interface to users, data communication network DCN, control systems of cutting machinery CM such as dedicated front-end software, e.g. vision systems, printers, screens, keyboards, user stations, object design tools, additional elements, etc. Hence, in relation to the estimating apparatus EA, the central input module is handling ingoing data communication and the central output module is handling outgoing data communication.

It should be noted that the estimating apparatus EA may be initiated from a remote position e.g. via a public network such as the internet.

Different cut descriptive parameters CDP such as total time for cutting, total time for cutting and pre- and post handling operations during a cutting procedure (e.g. handling of sheet material, handling of cut objects, etc.), summation of price for cutting e.g. 1, 10, 100 objects, summation of cutting time and total time for cutting e.g. 1, 10, 100 objects, etc. is estimated by the central processing unit PU of the estimating module EM of the estimating apparatus EA.

These cut descriptive parameters CDP are estimated based on a correlation of e.g. input from the user or cutting machinery CM, content of the central or local data storage DS, etc. The output may, as described above, be communicated to the user station and presented to the user and/or the cutting machinery CM in various forms.

The central data storage may comprise central databases CDB1-CDBn which may according to an embodiment of the invention comprise information of costumers, standard estimates and contours, sheet material, digital cutting systems, backup of local databases LDB, etc.

As an example of content a central database, central database CDB1 comprises information related to previously made estimates such as e.g. time and costs for previously cut objects, deviations between estimates of cut descriptive parameters CDP and actual values of the cut descriptive parameters CDP, cut shapes, contours or designs, type of sheet/roll material, thickness of sheet/roll material, size of sheet/roll material, etc.

Furthermore, actual cut descriptive parameters CDP and additional information such as cutting machinery CM, cutting tool, type of sheet material, etc. in relation to a specific previously cut object may be comprised in the central database CDB1. If the user needs to cut extra copies of an object cut in the past, it is by means of the central database CDB1 possible to retrieve information of the design, cutting tool, sheet material, etc.

As a further example of content of a central database, central database CDB2 comprises information related to costumers such as e.g. conditions of license with individual customers, statistics of sales to different costumer segments, lists of typical sheet/roll material types, sheet/roll material thickness or sheet/roll material size for the individual customers, statistics of typical cutting project quantities for the individual customers, etc.

As a further example of content of a central database, central database CDB3 comprises information related to standard contours such as cutting length of different shapes such as a square, rectangle, circle, triangle, etc. A standard contour may be used to ease the initiating of estimation, because if the object the user would like to cut is found and chosen from a predefined list of standard contours, the user may not need to type further information in relation to the contour of the object.

Furthermore, in relation to the individual standard contours, the central database CDB3 may comprise information of the number of corner points CP, number of objects per piece of sheet material, price and time for cutting these standards and other object features related to the standard contours.

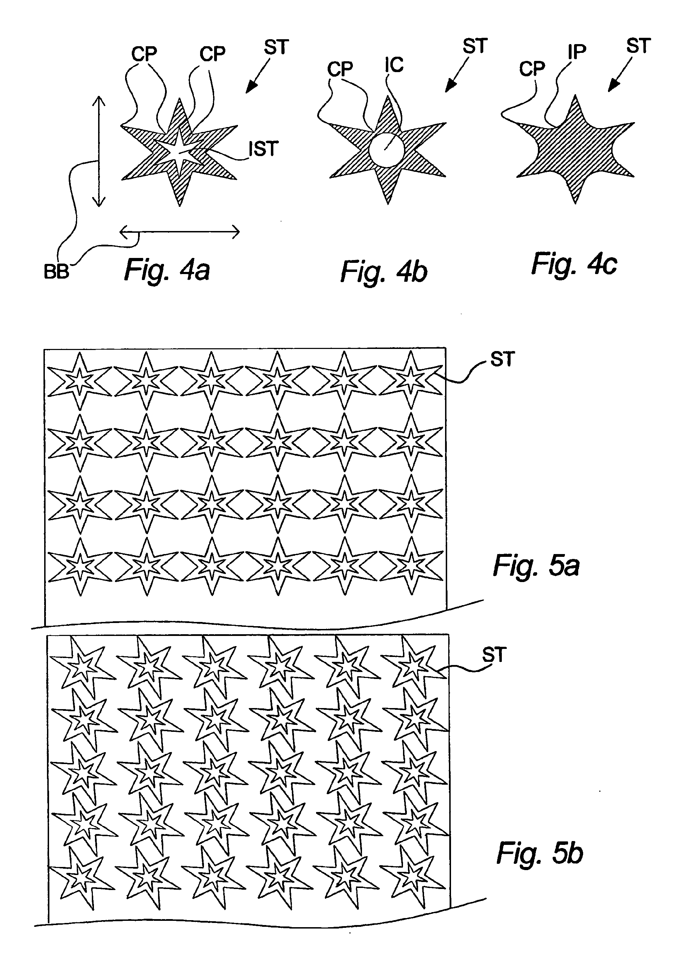

A corner point CP in relation to an object is a point where the tool of the cutting machinery CM e.g. has to be elevated to be able to continue the cutting of the contour of the object. This would e.g. be the case if an object comprises an acute angle; part of the center of the object needs to be removed. Corner points CP is in most cases linked with time where the cutting machinery CM is not cutting, hence, the more corner points CP the longer time it takes to cut an object. Non-limiting examples of corner points CP are illustrated in relation to figure 4a-4c.

As a further example of content of a central database, central database CDB4 comprises information related to different types of sheet material in which objects are cut. This information could e.g. be strength of the sheet material, maximum cut speed to ensure the sheet material is not damaged, price of the sheet material, if the sheet material is rolled up or in sheets, size of sheet material in sheets, e.g. length and width of a sheet, size of sheet material in rolls, e.g. length and width of a roll of sheet material, thickness of sheet material, handling of the sheet material, sectional cutting of the sheet material if the cutting shape, contour or design of the object is larger than the cutting area of the cutting machinery CM or larger in size than e.g. one piece of sheet or section of roll of material, etc. Such information may be used to compare the price and time for cutting the same object in different types of sheet material or different thickness of the same sheet material.
The main components of the sheet material may be a metal such as e.g. cupper or steel, biological material such as e.g. fibers from plants or trees, synthetic material such as e.g. different polymers or a composite such as a mix of two or more of the above mentioned. It should be noted that the thickness of sheet material may be from a few hundred millimeters to several centimeters such as 10 to 15 centimeters.

As a further example of content of a central database, central database CDB5 comprises information related to digital cutting systems such as brands of cutting machinery CM, cutting area size of the cutting machinery CM, relationship between machinery and cutting tool, quantity individual machinery is able to cut, time for changing cutting tool, time for cleaning the cutting machine CM, removal and / or packing of cut objects from the cutting machinery CM, if the cutting machinery CM is equipped with a sheet/roll feeding unit for feeding in and/or out purposes, time for scanning registration marks, etc. Such information may be used to compare the price and time for cutting the same object on different cutting machineries CM, e.g. cutting by a routing machinery cutting with a router bit compared to a roll cutter cutting with a knife.

It should be noted that registration marks are often used when an object is decorated or the sheet material is printed before cutting. In this situation it is preferred to have a vision system on the cutting machinery CM to be able to scan the registration marks and thereby adjust the cutting machinery CM to cut the object according to the decoration or print on the object.

As a further example of content of a central database or information provided to the estimating apparatus EA for improving the estimations performed are the number of objects and layout of this number on the sheet material, distance between objects and distance between the object and the outer edge of the sheet material, etc.

This and similar information may be relevant in relation to the chosen type of cutting tool. In general, when cutting the sheet material it is not put under the same stress as when routing; hence, when cutting, the distance between objects on the sheet material may e.g. be 2 millimeters and when routing e.g. with a 6 millimeter bit the distance may e.g. be 9 millimeters. As indicated the mentioned distances of course depends on the size of the bit and knife but also on how rigid the sheet material is.

It should be noted that the information related to adjustments of the cutting machinery CM, design of objects, etc. of which some are mentioned in relation to the central databases CDB may also be referred to as cutting parameters. Hence, cutting parameters may include adjustments or settings of the cutting machinery CM in relation to cutting a specific object, object parameters OP of the object to be cut, cut descriptive parameters CDP related to that object, etc.

It should be noted that there may be redundancy between information stored on the data storage DS of the user station US and information stored on the data storage DS of the estimating apparatus. Hence, the same information may be stored both at the central and at the local data storage DS.

The estimating apparatus EA is according to a preferred embodiment of the invention implemented centrally e.g. on a server enabling users, typically administrators and costumers, to access the estimating apparatus EA from a data communication network such as the internet or other global network systems. In this way it is at least via an administrator station AS possible to maintain the central data storage DS e.g. by adding or removing information.

Furthermore, it should be mentioned that both the data storage DS of the user station US and of the estimating apparatus EA may be adaptive so that once a user, cutting machinery or administrator has added information to the database LDB or central database CDB or an estimation has been made, information related hereto is stored so that future estimations may make use of this information.

According to an alternative embodiment of the invention, the estimating apparatus EA may be implemented locally at the site of a user.

The illustrated administrator station AS may according to an embodiment of the invention be identical with the user station US as described above.

According to an embodiment of the invention, the purpose of the administrator station AS is for an administrator to be able to correct, change, control, monitor and so on the content of the central data storage DS located in relation to the estimating apparatus EA and even sometimes also at least part of the content of the local data storage DS located in relation to the user station US.

Examples of administration could be adding information e.g. to the central database CDB such as pricelists, standard contours, etc. or administrate user groups e.g. add or remove individual users from discount groups, etc. or control communication between user and the estimating apparatus EA, changing the setting of hourly cost for the cutting machinery CM, adding new cutting tools to the cutting machinery equipment list, etc.

It should be noted that the description of elements of figure 2 should not be limiting for the scope of the invention. It is only the description of one embodiment of the invention and may be changed within the scope of the invention depending on demands or requirements. Furthermore, it is likely that not all illustrated elements are always necessary and that not illustrated elements may be included to adapt the invention to requirements from a user or from an administrator.

Figure 3 illustrates a flowchart with steps S1-S6 describing the use of the estimating apparatus EA according to an embodiment of the invention.

S1: As described, the estimating apparatus EA may either be located remotely or locally in relation to the user station US. In both cases the user needs to get access to the estimating apparatus EA before it is possible to receive any cut descriptive parameters CDP. The access may e.g. be obtained in form of purchasing a license to access the estimating apparatus EA e.g. via the internet, by implementing the estimating apparatus EA locally and thereby obtain direct access hereto or by installing an applet through which access may be obtained, etc.

It should be noted that the estimating apparatus may comprise information of users allowed to fully or partly use the estimating apparatus EA.

S2: When access to the estimating apparatus EA is obtained, the user needs to provide information to the local data storage DS and/or to the central data storage DS. This information may e.g. comprise type of cutting machinery available to the user and other information described in relation to figure 2.

Step S1 and S2 are initial steps which according to an embodiment of the invention are not necessary to perform every time an estimation is requested. Preferably the information provided/installation performed in these steps is remembered and stored locally or centrally. It should be noted that the order in which S1 and S2 are described here is arbitrary.

S3: When cut descriptive parameters CDP of a design of an object are required, information of geometrical characteristics of the object in form of object parameters OP is provided to the estimating apparatus EA e.g. through the user station US. It should be noted that at this stage in the design process the user of the estimating apparatus EA e.g. a designer may only have a few fundamental pieces of information of geometrical characteristics of the object and the final design of the object may be unknown at this stage. These fundamental pieces of information of geometrical characteristics of the object are in this document included in the term object parameters OP.

S4: The object parameters OP and relevant content of the central databases CDB and maybe also relevant content of the local database LDB are now correlated, resulting in cut descriptive parameters CDP. These cut descriptive parameters CDP are then provided to the user for evaluation.

S5: The estimated cut descriptive parameters CDP such as price and time for cutting the object are now evaluated by the user. The user needs to evaluate whether e.g. the price is within the budget, whether the object is worth the estimated price, whether it is possible to cut the object within a given period of time, etc. The latter is especially relevant if the number of cut objects is counted in a high number, e.g. in thousands.

S6: If the user e.g. a designer is satisfied S with the estimated cut descriptive parameters CDP it is possible for the user to finish or initiate finishing the design of the object. The estimated cut descriptive parameters CDP preferably equals the actual costs when the object is cut on the cutting machinery CM in its final design within a margin of error less than ± 10%. With this said, it should be noted that the accuracy of the estimated cut descriptive parameters CDP depends on the amount of and level of details in the provided object parameters. Hence, e.g. with only 2 object parameters provided to the estimating apparatus EA, the margin of error may be up to ±60%.

If the user is not satisfied NS with the estimated cut descriptive parameters CDP, the user needs to change the design of the object and return to step S3 where object parameters OP describing the new design is provided to the estimating apparatus EA. The estimating apparatus EA then estimates cut descriptive parameters CDP in step S4 which is evaluated in step S5.

The next time the user needs cut descriptive parameters CDP of an object, the user may start at step S3 by providing object parameters OP to the estimating apparatus EA.

If the user has new information e.g. regarding a new cutting machinery CM, new cutting tool, etc. the user may start at step S1 or S2.

It should be noted that when a user e.g. in step S2 makes a choice of which cutting machinery CM to use, this choice may entail that other choices are made by the estimating apparatus EA as described below.

If the user of the estimating apparatus only needs cut descriptive parameters of one cutting machinery, the user may not need to choose a type of cutting machinery as would be necessary if the user needs cut descriptive parameters in relation to cutting the same object on different cutting machineries. The same is also applicable in relation to selection of the type of sheet material in which the object is to be cut.

Hence, the selection of one type of cutting machinery may preclude various types of sheet material as a selection of cutting tool may preclude various types of sheet material. Furthermore, such selections of cutting tool and/or cutting machineries may also result in that the information of some object parameters is superfluous in relation to estimating cut descriptive parameters. For example, if e.g. a routing tool is chosen, the information of object parameters regarding acute angles of the object is superfluous because a router bit is able to cut acute angles without elevating. This is in contrary to the situation where the cutting tool is a knife which has to cut acute angles, to cut acute angles the knife needs to be elevated before continuing cutting when reaching an acute angle.

Hence, when cutting an object with acute angles with a knife object parameters in relation to acute angles such as how acute the angle is, number of acute angles, etc. effects the estimated cut descriptive parameters such as e.g. total cutting time for cutting the object much more than if the object is cut with a router. The latter may only need to decrease cutting speed when reaching an acute angle.

Figure 4a-4c illustrates different variations of a design of an object according to an embodiment of the invention to illustrate use of the estimating apparatus EA and to illustrate some of the object parameters OP. It should be noted that the design of the object is not essential to the scope of the invention and that other object parameters OP than the illustrated may be found in relation to other objects with different designs.

The object illustrated on figure 4a is a replica of a star ST where the centre of the star ST is cut away so that an inner star IST is found in the centre of the star ST. The object illustrated on figure 4b is also a replica of a star ST but here the centre is just removed forming an inner circle IC. The object illustrated in figure 4c is also a replica of a star ST but without an inner contour and with curved inner parts IP.

A user of the estimating apparatus EA might have to choose between one of the stars ST illustrated in figure 4a-4c from knowledge of e.g. price and time for cutting the stars ST. Hence, one example of using the estimating apparatus EA is to estimate cut descriptive parameters CDP such as price and time for cutting each of the illustrated variations of the star ST and then based hereon choose one of the designs of the illustrated stars ST based on the cut descriptive parameters CDP.

As described above, the user needs to provide object parameters OP to the estimating apparatus EA for the estimating apparatus EA to be able to perform the estimations of the cut descriptive parameters CDP. According to an embodiment of the invention, the following five object parameters OP need to be provided.

A first object parameter OP provided by the user is the bounding box size BB which e.g. influences the needed area of sheet material.

The bounding box size BB defines the length and width of the outermost points of the contour of the stars ST. From this information the estimating apparatus EA is able to calculate the area or amount of one star ST and thereby the total need of sheet material for a desired number of stars ST.

A second object parameter OP provided by the user is the category of the contour of the object to be cut, which e.g. influences on the length of the circumference of the contour of the object to be cut. In the example illustrated in figure 4a-4c the object is a six-pointed star ST and the estimating apparatus EA may then perform database look-ups to obtain information on length of six-pointed stars matching the bounding box size BB provided earlier.

Alternatively, the user can enter object parameters OP according to the design of the object from information provided by the tool/software in which the design of the object is made or this tool / software may on its own provide object parameters OP to the estimating apparatus EA.

The object parameters OP described so far in relation to figure 4a-4c (bounding box size BB and type of contour) is by the estimating apparatus EA used to estimate the total length of the contour of the object to be cut and the amount of sheet material needed for one object.

Furthermore, information regarding intricacy of the contour of the object and material in which the object is to be cut needs to be provided to the estimating apparatus EA to be able estimate e.g. cutting speed, cutting tool, etc.

A third object parameter OP provided by the user is the intricacy of the object e.g. described by the number of corner points CP and times the cutting tool needs e.g. to be elevated and turned to a new cutting direction both influencing the time it takes to cut an object. It should be noted that this is more relevant if the object is cut with a knife compared with a routing bit or a laser beam.

The contour of the six-pointed star ST illustrated in figure 4a comprises a plurality of corner points CP, because the angles of the six-points are so acute that the cutting tool such as a knife cannot cut continuously but needs to stop cutting to be elevated and to get in position to cut in the new direction. This is also the case for the inner star IST which is a small-scale replica of the star ST. Hence, the six-pointed star ST illustrated in figure 4a comprises 26 corner points CP distributed among 12 in relation to the star ST, 12 in relation to the inner star IST and 2 from elevating the cutting tool from the outer contour and to the centre of the star ST to be able to cut the inner star IST.

The contour of the six-pointed star ST illustrated in figure 4b is in size similar to the star ST illustrated in figure 4a. The only difference is the centre, which in figure 4b is an inner circle IC. Hence, the six-pointed star ST illustrated in figure 4b comprises 14 corner points CP, 12 in relation to the star ST and 2 in relation to cutting the inner circle IC.

The contour of the six-pointed star ST illustrated in figure 4c is in size similar to the star ST illustrated in figure 4a and 4b, but differs in that no cutting is required in the centre of the star ST and in that the inner part IP of the six-points are curved so that the cutting tool can continue cutting through these inner parts IP without elevating or stopping. Hence, the six-pointed star ST illustrated in figure 4c comprises only 6 corner points CP.

A fourth object parameter OP provided by the user is information of the type of sheet material in which the object is to be cut which e.g. influences the cutting machinery CM. If the star ST needs to be cut in a metal, the cutting machinery CM is preferably utilizing a routing procedure if the star ST needs to be cut in paper, the cutting machinery CM is preferably utilizing a knife cutting tool and if the star ST needs to be cut in hard plastics, the cutting machinery CM is preferably utilizing a hard material knife cutting tool, a routing procedure or a laser cutting procedure, etc. Obviously the cutting machinery CM also defines the cutting tool and both the cutting machinery CM and cutting tool have maximum cutting speed, which is known by the estimating apparatus EA from database look-ups.

Furthermore, the choice of cutting machinery CM may also define time in relation to at least some of the pre- and post handling of the sheet material such as time involving providing and removing sheet material to/from the cutting machinery CM, cleaning cutting tool/cutting machinery CM, handling the cut objects (e.g. are the object free from the remains of the sheet material or not), packing of cut objects, etc.

A fifth object parameter OP provided by the user is information of the thickness of the sheet material which may define the cutting method and cutting speed. The cutting method may e.g. be straight knife cutting, oscillate cutting, rotary cutting, routing, laser cutting, engraving, heat cutting, water cutting, cutting by ultrasonic waves, bevel cutting, punching, drilling, etc. When the cutting machinery CM and the cutting method are known, the estimating apparatus EA is able to estimate or look up the preferred or maximum cutting speed.

Hence, according to this embodiment of the invention, from these five object parameters OP the estimating apparatus EA is able to estimate cut descriptive parameters CDP such as the total price for cutting one or more of the individual stars ST and the total time for cutting one or more of the individual stars ST. This time and price may then be communicated to the user station US via the central communication module CCM and presented to the user via the local output module OM. With this information important knowledge of the cutting of the object is obtained and thereby it is easier for the user to make decisions of which design to use.

The output may be presented to the user in an almost infinite number of ways. Hence, the following example should not be considered as limiting for the invention.

According to a preferred embodiment of the invention, the total price for cutting a different numbers of an object is presented to the user, e.g. the price and time for cutting 1, 100, 200, 500, 1000 or more objects. This total price and/or time may be displayed together with the individual contributions to the total price and/or time. It then becomes possible to identify advantages in mass production versus the needed number of objects.

Furthermore, it becomes possible to get information of costs in relation to wear and tear of the cutting machinery CM, packing, cleaning, running-in/starting up the cutting machinery CM, the actual cutting, sheet material e.g. size of sheets and numbers of needed sheets, size of rolls of sheet material to cut a number of objects, etc.

According to the embodiment illustrated in figure 4a-4c, the estimating apparatus EA may estimate the above-mentioned costs in relation to each of the variations of star ST. The user is then able to choose the design which e.g. fits best to a budget and furthermore it is possible to locate the most expensive contributions to the total costs and thereby re-design the star ST accordingly if costs need to be decreased.

Is should be mentioned that if 1000 objects are cut in sheet material with a certain number of objects per sheet and this number exploits only 5/6 of the area of each sheet of sheet material, the individual cost per object may differ very much from the situation where e.g. all of the individual sheets are exploited fully due to the object size being slightly reduced.

Furthermore, it should be mentioned that if 1000 objects are cut in sheet material with a certain number of objects per sheet and this number only exploits half of the area of the last sheet of sheet material, the individual cost per object may not differ very much if e.g. further 75 objects are cut to fully exploit the last of the sheet material. Such and similar comparisons are easily accessible because of the above-mentioned presentation of the individual contributions to the total price.

According to an embodiment of the invention, the estimating apparatus EA may suggest the most favourable or most cost efficient number of objects to be cut according to predetermined rules e.g. lowest price, preferred type of sheet material, etc.

Furthermore, the estimating apparatus EA may perform alternative calculations of the same object e.g. on different types of sheet material, on different thickness of the same type of sheet material, cut from by different types of cutting machinery CM, etc.

The above-mentioned output may be presented to the user in form of numbers or diagrams which may be displayed on a screen and/or printed in hard copy.

According to alternative embodiments of the invention, additional information in relation to the above-mentioned may be provided to the estimating apparatus EA and additional features may be used to optimize the estimations and perform additional estimations of which some are described below.

One additional feature to reduce the costs of cutting a plurality of objects is optimizing the number of objects on the sheet material. If the star ST illustrated in figure 4a is used as an example, figure 5a illustrates one layout of stars ST on the sheet material. After the estimating apparatus EA has performed a layout optimisation of the layout of the stars ST on the sheet material as illustrated on figure 5b where the same area of sheet material comprises an increased number of starts ST.

A further additional feature is advantageous if the user possess more than one cutting machine CM (e.g. a laser cutter and a router cutter) it may be possible to adjust the estimating apparatus EA to estimate, for these cutting machines CM, the costs for cutting the same number of objects in the same sheet material for each of the different cutting machines CM. Thereby the cutting of the objects may be estimated for each cutting machinery CM and the most cost effective cutting machinery CM is presented to the user.

A further additional feature is advantageous if the user possess a cutting machinery CM capable of operating more than one tool such as one or more cutting tools, creasing tools, tool for making braille, tool for drilling holes, etc. If this information is provided to the estimating apparatus EA this is taken into account when estimating the cut descriptive parameters CDP of objects comprising creasing lines and/or braille and/or holes. Hence, it becomes possible to compare these cut descriptive parameters CDP e.g. with cost or time in relation to such object cut/creased/drilled in more than one round.

A further additional feature is when large objects or a plurality of objects are to be cut, and then such cutting may be cut by sections. A section may e.g. be defined by the area in which it is possible for the cutting machinery CM to cut, by one sheet of sheet material, by an area on sheet material feed from a roll, etc.

If an object is larger than one section, a first section is cut and a new section of sheet material is provided to the cutting machinery CM e.g. fed from a roll of sheet material or a new single sheet is provided. In this way it is possible to cut very large objects.

Furthermore, if e.g. 1000 objects are to be cut in individual sheets of sheet material and the size and contour of these objects only exploit 75% of each sheet or section, the individual cost per object may differ significantly from the situation where the object position is slightly moved to fully exploit each sheet or section of sheet material.

Time for changing section and/or sheets (including a re-scanning of registration marks if any is present) is in an embodiment of the invention part of the estimation of cut descriptive parameters CDP as well as the effect of resizing and layout of objects on the sheet material may be part of the estimation of cut descriptive parameters CDP.

A further additional feature within the scope of the invention is feedback related to the cutting of an object, e.g. live feedback or feedback comprising information related to the result of the cutting. Such results would preferably include cut descriptive parameters CDP. Feedback may be provided to the estimating apparatus EA directly from the cutting machinery CM e.g. from front-end software of the cutting machinery CM, from operators of the cutting machinery CM, from users of the estimating apparatus EA, designers, etc.

If such feedback is provided, the estimating apparatus EA becomes adaptive in the sense that historical cut descriptive parameters CDP or other results may be used as references for or to correct new/future estimations. Hence, feedback information received e.g. in form of comma-separated text files or other appropriate data formats may be stored in one or more of the local or central databases and thereby reused.

Furthermore, it may be possible to perform post-estimations based on the actual data from the cutting of an object. Information of variations between the result of the initial estimation described throughout this document and the post-estimation may be used to improve future versions of the estimating apparatus EA e.g. in relation to estimations, communication between the user station US and the estimation apparatus EA, ordering of estimations, etc.

A further additional feature within the scope of the invention is feed-out of cutting parameters from the estimating apparatus EA to the cutting machinery CM. Such feed-out information may e.g. be provided from the user of the estimating apparatus EA to the operator of the cutting machinery CM or directly e.g. via a data communication network DCN from the estimating apparatus EA to the cutting machinery CM.

Cutting parameters may e.g. comprise adjustments of the cutting machinery CM in relation to cutting of a specific object. Such adjustments may e.g. be cutting speed, type of knife blade, etc. which when provided to the cutting machinery CM may decrease the amount of time used e.g. on manually adjustment of the cutting machinery CM in relation to start-up when a new object is to be cut. Furthermore, the risk of making errors in adjustment of the cutting machinery CM may be minimized because the operator of the cutting machinery CM is instructed how to adjust the cutting machinery CM.

A further additional feature within the scope of the invention is feed-in of cutting parameters from a customer to the estimating apparatus EA. As described above, the estimating apparatus EA may be configured to receive information related to an object on which estimations of cut descriptive parameters CDP is to be made. This information may e.g. originate from a user of a design tool, directly from software operated by the customer, etc.

In an embodiment of the invention the customer is controlling a user station US including a cutting machinery CM and from the user station US cutting parameters are provided to an estimating apparatus EA either located remotely or in relation to the user station US. If the user station US comprises design tools, the cutting parameters may be provided to the estimating apparatus EA from the design tool automatically when estimation is desired. Alternatively, the designer is providing the cutting parameters to the estimating apparatus EA. It should be noted that also other elements of a user station US may provide cutting parameters to the estimating apparatus EA. Hence, the cutting parameters may also originate from a database comprising information relating to e.g. sheet material preferred by the user, often used object designs, etc.

A further additional feature within the scope of the invention is the possibility of providing cutting parameters from the estimating apparatus EA to e.g. the user station US, additional element AE, cutting machinery CM, design tool, etc. When an object is cut various cutting parameters are precisely known such as time and cost of the cutting, used cutting tool, distance from the cutting tool to the sheet material, cutting speed, etc. Such cutting parameters may then be stored in a database and used later e.g. when cut descriptive parameters of similar objects are desired.

It should be noted that throughout this document estimation may also be referred to as calculations.

Is should be noted that any embodiments illustrated on the figures and any of the features described in this document may be combined.

It should be noted that by the term digital cutting is preferably understood the separation, removal or deforming of a sheet material by means of a tool of a digital cutting machinery and according to the shape or contour form of a digital file. Separation is preferably understood as dividing a sheet material into two or more pieces e.g. by using a tool such as a knife. By removal is preferably understood removing smaller or larger parts of a sheet material and thereby marking the surface of a sheet material or dividing a sheet material into two or more pieces e.g. by using tools such as a router bit, laser, engraving bit, etc. De-forming is preferable understood as compressing or destabilizing a sheet material without dividing the sheet material into two or more pieces e.g. by using tools such as a creasing wheel, creasing pin, punching tool, ultrasound beam, laser, etc.

### LIST

- AE: Additional Elements related to estimation of cut descriptive data,
- AS: Administration Station from which an administrator may access the estimating apparatus,
- BB: Bounding Box size describing the length and width of the object,
- CCM: Central Communication Module through which the estimation apparatus may communicate,
- CDB: Central Database for structured storage of data related to the cutting system,
- CDP: Cut Descriptive Parameters in relation to cutting one or more objects,
- CM: Cutting Machinery for cutting an object in a sheet material,
- CP: Corner Point in the design of an object,
- DCN: Data Communication Network for data communication,
- DS: Data Storage for storing data related to cutting an object,
- EA: Estimating Apparatus for estimating cut descriptive parameters,
- EM: Estimating Module for estimating cut descriptive parameters,
- IC: Inner Contour of an object,
- IM: Input Module through which data may be received,
- IP: Inner Part of the design of the object illustrated on figure 4a-4c,
- LCM: Local Communication Module through which users may communicate with the estimating apparatus,
- LDB: Local Database for structured storage of data related to the cutting system,
- LPU: Local Processing Unit for processing data locally,
- NS: Not Satisfied with the evaluation of cut descriptive data,
- OM: Output Module through which data may be communicated,
- OP: Object Parameters describing features in relation to the object and the cutting of the object,
- PU: Processing Unit for processing data centrally,
- S: Satisfied with cut descriptive data,
- ST: Star, an example of an object,
- S1-S6: Step 1 to Step 6 in a flowchart,
- TDS: Temporary Data Storage,
- US: User Station which may comprise local elements of the estimating apparatus.

## Claims

1. An apparatus (EA) for estimating cut descriptive parameters (CDR) in relation to digital cutting, by means of one or more digital cutting machineries (CM), of one or more objects in a sheet material,
said estimating apparatus (EA) comprising
an input module (IM) enabling a user to provide a set of object parameters (OP) to said estimating apparatus (EA), said object parameters (OP) comprising geometric characteristics of said one or more objects to be cut by the one or more digital cutting machineries (CM),
a data storage (DS) for storage of information at least in relation to said one or more digital cutting machineries (CM) and information at least in relation to said sheet material,
an estimating module (EM) for estimating said cut descriptive parameters (CDP) by means of a data processor unit (PU) based on said object parameters (OP) provided by a user and the stored information relating to the one or more digital cutting machineries (CM) and the stored information relating to the sheet material, and
an output module (OM) for presenting said cut descriptive parameters (CDP) to said user,
said cut descriptive parameters (CDP) being estimated based on a correlation of said object parameters (OP), said information in relation to said one or more digital cutting machineries (CM) and said information in relation to said sheet material,
**characterized in that** at least one of said object parameters (OP) is selected from the list consisting of:
- size of the box bounding an object to be cut, and
- presence of pre-print of object contour on the sheet material.

2. Estimating apparatus according to claim 1, wherein at least one further of said object parameters (OP) is selected from the list consisting of:
- number of corner points of an object to be cut,
- length of cutting path of an object to be cut,
- tool to be used for cutting an object, and
- number of objects to be cut.

3. Estimating apparatus according to claim 1 or 2, wherein at least one of said object parameters (OP) is the contour of an object to be cut selected from a predefined list of standard contours, information relating to the standard contours of said predefined list being stored in said data storage (DS).

4. Estimating apparatus according to any of claims 1-3, wherein the set of object parameters (OP) comprises a selection of a sheet material from a list of sheet material for which information is stored in said data storage (DS).

5. Estimating apparatus according to any of the preceding claims, wherein said stored information relating to said one or more digital cutting machineries (CM) and to said sheet material comprises cutting speeds for various combinations of one or more sheet material and one or more cutting tools.

6. Estimating apparatus according to claim 4 or 5, wherein said stored information relating to said one or more digital cutting machineries (CM) and to said sheet material comprises information as to which of a list of cutting tools may be used for cutting which of said list of sheet material.

7. Estimating apparatus according to any of the preceding claims, wherein at least one of said cut descriptive parameters is selected from the list consisting of:
- costs of cutting the one or more objects,
- time in relation to cutting the one or more objects, and
- amount of sheet material to be used for cutting the one or more objects.

8. Estimating apparatus according to any of the preceding claims, wherein the cut descriptive parameters (CDP) related to previously made estimations are provided to the estimation apparatus (EA).

9. A method of estimating cut descriptive parameters (CDP) in relation to digital cutting of one or more objects in a sheet material, said method comprising the steps of:
- retrieving object parameters (OP) comprising geometric characteristics of the object to be cut by means of an input module (IM),
- retrieving information of a sheet material in which the object is to be cut, the information of the sheet material is retrieved from a data storage (DS),
- correlating said object parameters (OP) and said information of said sheet material by means of a data processing unit (PU) resulting in a cut descriptive parameter (CDP) describing characteristics in relation to cutting the object, and
- presenting said cut descriptive parameters (CDP) to said user by means of an output module (OM),
**characterized in that** at least one of said object parameters (OP) is selected from the list consisting of:
- size of the box bounding an object to be cut, and
- presence of pre-print of object contour on the sheet material.

10. A method according to claim 9, wherein information in relation to a cutting machinery (CM) is included in said correlation performed by the data processing unit (PU) resulting in the cut descriptive parameters (CDP).

11. A method according to claim 9 or 10, wherein said correlation is performed in a location physically apart from a location of said cutting machinery (CM).

12. A method according to claims 9-11, wherein said cut descriptive parameters (CDP) is communicated from a first location to a second location by means of a data communication network (DCN).

13. A computer program product directly loadable into the internal memory of a computer comprising software enabling the computer to possess the technical features of an estimating apparatus (EA) according to any of claims 1-8.

14. A computer program product directly loadable into the internal memory of a computer comprising software enabling the computer to estimate cut descriptive parameters (CDP) according to the method of any of claims 9-12.

## Patentansprüche

1. Vorrichtung (EA) zum Schätzen von schnittbeschreibenden Parametern (CDR) im Zusammenhang mit dem digitalen Schneiden, mittels einer oder mehrerer digitaler Schneidemaschinenanlagen (CM), von einem oder mehreren Objekten aus einem Folien- oder Plattenmaterial,
wobei die Schätzvorrichtung (EA) Folgendes umfasst:
ein Eingabemodul (IM), das es einem Benutzer ermöglicht, einen Satz von Objektparametern (OP) in die Schätzvorrichtung (EA) einzugeben, wobei diese Objektparameter (OP) geometrische Eigenschaften des einen oder der mehreren Objekte umfassen, die von der einen oder den mehreren digitalen Schneidemaschinenanlagen (CM) zu schneiden sind,
einen Datenspeicher (DS) zum Speichern von Information, die wenigstens die eine oder mehreren digitalen Schneidemaschinenanlagen (CM) betrifft, und Information, die wenigstens das Folien- oder Plattenmaterial betrifft,
ein Schätzmodul (EM) zum Schätzen der schnittbeschreibenden Parameter (CDP) mittels einer Datenverarbeitungseinheit (PU) basierend auf den von einem Benutzer eingegebenen Objektparametern (OP) und der gespeicherten Information, die die eine oder mehreren digitalen Schneidemaschinenanlagen (CM) betrifft, und der gespeicherten Information, die das Folien- oder Plattenmaterial betrifft, und
ein Ausgabemodul (OM) zum Darstellen der schnittbeschreibenden Parameter (CDP) für den Benutzer,
wobei die schnittbeschreibenden Parameter (CDP) basierend auf einer Verknüpfung der Objektparameter (OP), der Information, die die eine oder mehreren digitalen Schneidemaschinenanlagen (CM) betrifft, und der Information, die das Folien- oder Plattenmaterial betrifft, geschätzt werden,
**dadurch gekennzeichnet, dass**
wenigstens einer der Objektparameter (OP) aus der Liste gewählt ist, die aus Folgendem besteht:
- der Größe der Box, die ein zu schneidendes Objekt umgibt, und
- dem Vorhandensein eines Vordrucks der Objektkontur auf dem Folien- oder Plattenmaterial.

2. Schätzvorrichtung nach Anspruch 1, wobei wenigstens ein weiterer der Objektparameter (OP) aus der Liste gewählt ist, die aus Folgendem besteht:
- der Zahl der Eckpunkte eines zu schneidenden Objekts,
- der Länge des Schneidewegs eines zu schneidenden Objekts,
- dem Werkzeug, das zum Schneiden eines Objekts verwendet wird, und
- der Zahl der zu schneidenden Objekte.

3. Schätzvorrichtung nach Anspruch 1 oder 2, wobei wenigstens einer der Objektparameter (OP) die Kontur eines zu schneidenden Objekts ist, die aus einer vorgegebenen Liste von Standardkonturen gewählt ist, wobei Information, die die Standardkonturen der vorgegebenen Liste betrifft, im Datenspeicher (DS) gespeichert ist.

4. Schätzvorrichtung nach einem der Ansprüche 1 bis 3, wobei der Satz von Objektparametern (OP) eine Auswahl für ein Folien- oder Plattenmaterial aus einer Liste von Folien- oder Plattenmaterialien umfasst, für die Information im Datenspeicher (DS) gespeichert ist.

5. Schätzvorrichtung nach einem der vorhergehenden Ansprüche, wobei die gespeicherte Information, die die eine oder mehreren digitalen Schneidemaschinenanlagen (CM) und das Folien- oder Plattenmaterial betrifft, Schneidegeschwindigkeiten für verschiedene Kombinationen von einem oder mehreren Folien- oder Plattenmaterialien und einem oder mehreren Schneidwerkzeugen umfasst.

6. Schätzvorrichtung nach Anspruch 4 oder 5, wobei die gespeicherte Information, die die eine oder mehreren digitalen Schneidemaschinenanlagen (CM) betrifft und die das Folien- oder Plattenmaterial betrifft, Information darüber umfasst, welches aus einer Liste von Schneidwerkzeugen dafür verwendet werden kann, ein bestimmtes aus der Liste von Folien- oder Plattenmaterialien zu schneiden.

7. Schätzvorrichtung nach einem der vorhergehenden Ansprüche, wobei wenigstens einer der schnittbeschreibenden Parameter aus der Liste gewählt ist, die aus Folgendem besteht:
- den Kosten für das Schneiden des einen oder der mehreren Objekte,
- die Zeitdauer im Zusammenhang mit dem Schneiden des einen oder der mehreren Objekte, und
- der Menge an Folien- oder Plattenmaterial, das zum Schneiden des einen oder der mehreren Objekte benötigt wird.

8. Schätzvorrichtung nach einem der vorhergehenden Ansprüche, wobei die schnittbeschreibenden Parameter (CDP), die zuvor ausgeführte Schätzungen betreffen, der Schätzvorrichtung (EA) zur Verfügung gestellt werden.

9. Verfahren zum Schätzen von schnittbeschreibenden Parametern (CDP) im Zusammenhang mit dem digitalen Schneiden von einem oder mehreren Objekten aus einem Folien- oder Plattenmaterial, wobei das Verfahren die folgenden Schritte umfasst:
- Erfassen von Objektparametern (OP), die geometrische Eigenschaften des zu schneidenden Objekts umfassen, mittels eines Eingabemoduls (IM),
- Abrufen von Information über ein Folien- oder Plattenmaterial aus dem das Objekt zu schneiden ist, wobei die Information über das Folien- oder Plattenmaterial aus einem Datenspeicher (DS) abgerufen wird,
- Verknüpfen der Objektparameter (OP) und der Information über das Folien- oder Plattenmaterial mittels einer Datenverarbeitungseinheit (PU), woraus sich ein schnittbeschreibender Parameter (CDP) ergibt, der Eigenschaften beschreibt, die das Schneiden des Objekts betreffen, und
- Darstellen der schnittbeschreibenden Parameter (CDP) für den Benutzer mittels eines Ausgabemoduls (OM),
**dadurch gekennzeichnet, dass** wenigstens einer der Objektparameter (OP) aus der Liste gewählt ist, die aus Folgendem besteht:
- der Größe der Box, die ein zu schneidendes Objekt umgibt, und
- dem Vorhandensein eines Vordrucks der Objektkontur auf dem Folien- oder Plattenmaterial.

10. Verfahren nach Anspruch 9, wobei Information, die eine Schneidemaschinenanlage (CM) betrifft, in die von der Datenverarbeitungseinheit (PU) ausgeführte Verknüpfung, die die schnittbeschreibenden Parameter (CDP) ergibt, aufgenommen wird.

11. Verfahren nach Anspruch 9 oder 10, wobei die Verknüpfung an einem Ort ausgeführt wird, der physisch getrennt von einem Ort der Schneidemaschinenanlage (CM) ist.

12. Verfahren nach den Ansprüchen 9 bis 11, wobei die schnittbeschreibenden Parameter (CDP) von einem ersten Ort zu einem zweiten Ort mittels eines Datenkommunikationsnetzes (DCN) übertragen werden.

13. Computerprogrammprodukt, das direkt in den internen Speicher eines Computers ladbar ist und das Software umfasst, die den Computer dazu befähigt, die technischen Eigenschaften einer Schätzvorrichtung (EA) nach einem der Ansprüche 1 bis 8 zu haben.

14. Computerprogrammprodukt, das direkt in den internen Speicher eines Computers ladbar ist und das Software umfasst, die den Computer dazu befähigt, schnittbeschreibende Parameter (CDP) gemäß dem Verfahren nach einem der Ansprüche 9 bis 12 zu schätzen.

## Revendications

1. Appareil (EA) d'estimation de paramètres descriptifs de coupe (CDR) concernant une coupe numérique, au moyen d'une ou plusieurs machineries de coupe numérique (CM), d'un ou plusieurs objets dans un matériau en feuilles,
ledit appareil d'estimation (EA) comprenant :
un module d'entrée (IM) permettant à un utilisateur de fournir un ensemble de paramètres d'objet (OP) audit appareil d'estimation (EA), lesdits paramètres d'objet (OP) comprenant des caractéristiques géométriques desdits un ou plusieurs objets à couper par les une ou plusieurs machineries de coupe numérique (CM),
un dispositif de stockage de données (DS) pour le stockage d'informations au moins concernant lesdites une ou plusieurs machineries de coupe numérique (CM) et d'informations au moins concernant ledit matériau en feuilles,
un module d'estimation (EM) pour l'estimation desdits paramètres descriptifs de coupe (CDP) au moyen d'une unité de traitement de données (PU) sur la base desdits paramètres d'objet (OP) fournis par un utilisateur et des informations stockées concernant les une ou plusieurs machineries de coupe numérique (CM) et des informations stockées concernant le matériau en feuilles, et
un module de sortie (OM) pour la présentation desdits paramètres descriptifs de coupe (CDP) audit utilisateur,
lesdits paramètres descriptifs de coupe (CDP) étant estimés sur la base d'une corrélation desdits paramètres d'objet (OP), desdites informations concernant lesdites une ou plusieurs machineries de coupe numérique (CM) et desdites informations concernant ledit matériau en feuilles,
**caractérisé en ce que**
au moins un desdits paramètres d'objet (OP) est sélectionné dans une liste constituée :
- de la taille de la boîte délimitant un objet à couper, et
- de la présence d'une pré-impression du contour d'un objet sur le matériau en feuilles.

2. Appareil d'estimation selon la revendication 1, dans lequel au moins un autre desdits paramètres d'objet (OP) est sélectionné dans la liste constituée :
- du nombre de points anguleux d'un objet à couper,
- de la longueur du chemin de coupe d'un objet à couper,
- de l'outil à utiliser pour couper un objet, et
- du nombre d'objets à couper.

3. Appareil d'estimation selon la revendication 1 ou 2, dans lequel au moins un desdits paramètres d'objet (OP) est le contour d'un objet à couper sélectionné dans une liste prédéfinie de contours standard, des informations concernant des contours standard de ladite liste prédéfinie étant stockées dans ledit dispositif de stockage de données (DS).

4. Appareil d'estimation selon l'une quelconque des revendications 1 à 3, dans lequel l'ensemble de paramètres d'objet (OP) comprend une sélection d'un matériau en feuilles dans une liste de matériaux en feuilles pour lesquels des informations sont stockées dans ledit dispositif de stockage de données (DS).

5. Appareil d'estimation selon l'une quelconque des revendications précédentes, dans lequel lesdites informations stockées concernant lesdites une ou plusieurs machineries de coupe numérique (CM) et ledit matériau en feuilles comprennent des vitesses de coupe pour diverses combinaisons d'un ou plusieurs matériaux en feuilles et d'un ou plusieurs outils de coupe.

6. Appareil d'estimation selon la revendication 4 ou 5, dans lequel lesdites informations stockées concernant lesdites une ou plusieurs machineries de coupe numérique (CM) et ledit matériau en feuilles comprennent des informations relatives à quel outil de la liste d'outils de coupe peut être utilisé pour couper tel matériau de la liste de matériaux en feuilles.

7. Appareil d'estimation selon l'une quelconque des revendications précédentes, dans lequel au moins un desdits paramètres descriptifs de coupe est sélectionné dans la liste constituée :
- des coûts de coupe des un ou plusieurs objets,
- du temps concernant la coupe des un ou plusieurs objets, et
- de la quantité de matériaux en feuilles à utiliser pour la coupe des un ou plusieurs objets.

8. Appareil d'estimation selon l'une quelconque des revendications précédentes, dans lequel les paramètres descriptifs de coupe (CDP) se rapportant à des estimations réalisées précédemment sont fournis à l'appareil d'estimation (EA).

9. Procédé d'estimation de paramètres descriptifs de coupe (CDP) concernant une coupe numérique d'un ou plusieurs objets dans un matériau en feuilles, ledit procédé comprenant les étapes suivantes :
- la récupération de paramètres d'objet (OP) comprenant des caractéristiques géométriques de l'objet à couper au moyen d'un module d'entrée (IM),
- la récupération d'informations d'un matériau en feuilles dans lequel l'objet doit être coupé, les informations du matériau en feuilles sont récupérées d'un dispositif de stockage de données (DS),
- la corrélation desdits paramètres d'objet (OP) et des informations dudit matériau en feuilles au moyen d'une unité de traitement de données (PU) ayant pour résultat un paramètre descriptif de coupe (CDP) décrivant des caractéristiques concernant la coupe de l'objet, et
- la présentation desdits paramètres descriptifs de coupe (CDP) audit utilisateur au moyen d'un module de sortie (OM),
**caractérisé en ce que**
au moins un desdits paramètres d'objet (OP) est sélectionné dans la liste constituée :
- de la taille de la boîte délimitant un objet à couper, et
- de la présence d'une pré-impression d'un contour d'objet sur le matériau en feuilles.

10. Procédé selon la revendication 9, dans lequel des informations concernant une machinerie de coupe (CM) sont incluses dans ladite corrélation réalisée par l'unité de traitement de données (PU) ayant pour résultat des paramètres descriptifs de coupe (CDP).

11. Procédé selon la revendication 9 ou 10, dans lequel ladite corrélation est réalisée dans un emplacement physiquement séparé d'un emplacement de ladite machinerie de coupe (CM).

12. Procédé selon les revendications 9 à 11, dans lequel lesdits paramètres descriptifs de coupe (CDP) sont communiqués d'un premier emplacement à un second emplacement au moyen d'un réseau de communication de données (DCN).

13. Produit de programme d'ordinateur pouvant être chargé directement dans la mémoire interne d'un ordinateur comprenant un logiciel permettant à l'ordinateur de posséder les caractéristiques techniques d'un appareil d'estimation (EA) selon l'une quelconque des revendications 1 à 8.

14. Produit de programme d'ordinateur pouvant être chargé directement dans la mémoire interne d'un ordinateur comprenant un logiciel permettant à l'ordinateur d'estimer des paramètres descriptifs de coupe (CDP) selon le procédé selon l'une quelconque des revendications 9 à 12.
